# EUROPEAN PATENT APPLICATION

(11) **EP 3 761 255 A1**
(43) Date of publication of application: **06.01.2021**
(21) Application number: 19183727.7
(22) Date of filing: 01.07.2019
(51) Int. Cl.: G06Q 50/06, B60L 55/00, B60L 53/63, B60L 53/64, B60L 53/65, B60L 53/66, B60L 53/67, B60L 53/68, H02J 7/00, H02J 3/00, H02J 3/14, G06Q 20/22, H04L 29/08, G07F 15/00

(54) **CONTROL OF POWER NETWORK BY MEANS OF A DISTRIBUTED LEDGER**

(71) Applicant: ABB Schweiz AG, 5400 Baden (CH)
(72) Inventor: VELOTTO, Giovanni, 723 56 Västerås (SE); MAJUMDER, Ritwik, 723 44 Västerås (SE); VAN-DER-HORST, Arjen, 2623 GT Delft (NL); KIREEV, Mikhail, 2215LZ Voorhout (NL)
(74) Representative: Kransell & Wennborg KB

(57) **Abstract**

The present disclosure relates to a method of controlling an electrical power network (1) comprising a distribution grid (3) of a grid operator (2) and a plurality of charging stations (5) for electrical vehicles (EV) (7). The method comprises maintaining a distributed ledger which is shared over a peer-to-peer (P2P) network (10) in which the grid operator, each of the plurality of charging stations and each of the EVs using said charging stations comprises a node in said P2P network. The method also comprises, by means of a consensus algorithm, updating the distributed ledger with tokens of digital information relevant to the electrical power network. The method also comprises controlling the electrical power network based on the digital information of the tokens in the updated distributed ledger.

## Description

### TECHNICAL FIELD

The present disclosure relates to a method of controlling an electrical power network comprising a distribution grid and a plurality of charging stations for electrical vehicles (EV).

### BACKGROUND

The high expected penetration of EV charger in the electric distribution networks implies several challenges regarding deployment and development of charging infrastructures and electric vehicle supply equipment.

The integration of Information and Communication Technologies (ICT) within the grid infrastructure is generally regarded as a tool to provide solutions for facing such issues and enable to exploit the benefits arising from data analysis. Therefore, also for the particular case of EV chargers, the connectivity capabilities and functionalities of systems and components and its optimizations is relevant for allowing an easier and cost effective penetration of EV chargers in the electric grids. These functionalities will play also a role for the realization of new business models and influence the business environment.

In implementing such new functionalities for EV chargers, common problems that may need to be addressed are how to share and elaborate information, even sensitive information, among different entities (e.g. car owner/operator, parking operator, energy dealer, grid operator etc.) that have no trust or limited trust in each other and in a centralized way of handling information.

The number of EVs is expected to considerably increase in the coming years. For example, falling battery prices will presumably bring price competitive electric vehicles to all major light-duty vehicle segments before 2030. The growth of the electric vehicle market will necessarily require development of the electric charging infrastructures and related services for allowing the use of such large volumes of new vehicles.

Distributed ledgers technology is attracting interest and research resources in the last years as a software platform technology for data sharing that can support the development of digitalized decentralized markets with several fields of applications. Distributed ledgers are systems (databases) that enable parties who don't fully trust each other to form and maintain consensus about the existence, status and evolution of a set of shared data.

There are different approaches to implementing distributed ledger technologies. A diverse landscape of players has emerged, including software service providers as Amazon (AWS), Microsoft (Azure), IBM (BlueMix). Each approach has its own merits and challenges.

A Smart Contract is a technology which is proposed with several conceptions. One definition is that a smart contract is an automatable and enforceable agreement. Automatable by computer, although some parts may require human input and control. Enforceable either by legal enforcement of rights and obligations or via tamper-proof execution of computer code. Smart contracts may be hosted and executed in a decentralized way in a distributed ledger.

Cryptographic tokens are entries in a distributed ledger that can have different roles in supporting decentralized markets. They can be used to store value, to pay for services delivered on the network or to set economic rules in the markets.

US 2018/272886 discloses a supply medium (electrical power) exchange system for mobile units (e.g. cars). The system comprises supply medium exchange stations (charging stations) arranged to exchange the supply medium with the mobile unit. A peer-to-peer (P2P) module is assigned to the mobile unit and is arranged to via peer-to-peer communication cause release of the exchange. The use of block chain or decentral ledger as well as smart contracts are disclosed.

### SUMMARY

It is an objective of the present invention to provide a decentralized way of controlling an electrical power network including charging stations for EVs by means of a distributed ledger.

According to an aspect of the present invention, there is provided a method of controlling an electrical power network comprising a distribution grid of a grid operator and a plurality of charging stations for electrical vehicles (EV). The method comprises maintaining a distributed ledger which is shared over at least one peer-to-peer (P2P) network in which the grid operator, each of the plurality of charging stations and each of the EVs using or configured/able to use said charging stations comprises a node in said P2P network. The method also comprises, by means of a consensus algorithm, updating the distributed ledger with tokens of digital information relevant to the electrical power network. The method also comprises controlling the electrical power network based on the digital information of the tokens in the updated distributed ledger.

According to another aspect of the present invention, there is provided a computer program product (22) comprising computer-executable components (23) for causing a network controller (4) to perform the method of any preceding claim when the computer-executable components are run on processing circuitry (21) comprised in the network controller.

According to another aspect of the present invention, there is provided a network controller for controlling an electrical power network comprising a distribution grid of a grid operator and a plurality of charging stations for EVs. The network controller comprises processing circuitry, and data storage storing instructions executable by said processing circuitry whereby said network controller is operative to maintain a distributed ledger which is shared over a P2P network in which the grid operator, each of the plurality of charging stations and each of the EVs configured to use said charging stations comprises a node in said P2P network; by means of a consensus algorithm, update the distributed ledger with tokens of digital information relevant to the electrical power network; and control the electrical power network based on the digital information of the tokens in the updated distributed ledger.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an electrical power network, as well as of a P2P network, in accordance with some embodiments of the present invention.
Fig 2 is a schematic block diagram of a controller of a distribution grid, in accordance with some embodiments of the present invention.
Fig 3 is a schematic block diagram of a node in a P2P network, in accordance with some embodiments of the present invention.
Fig 4 is a schematic flow chart of a method, in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

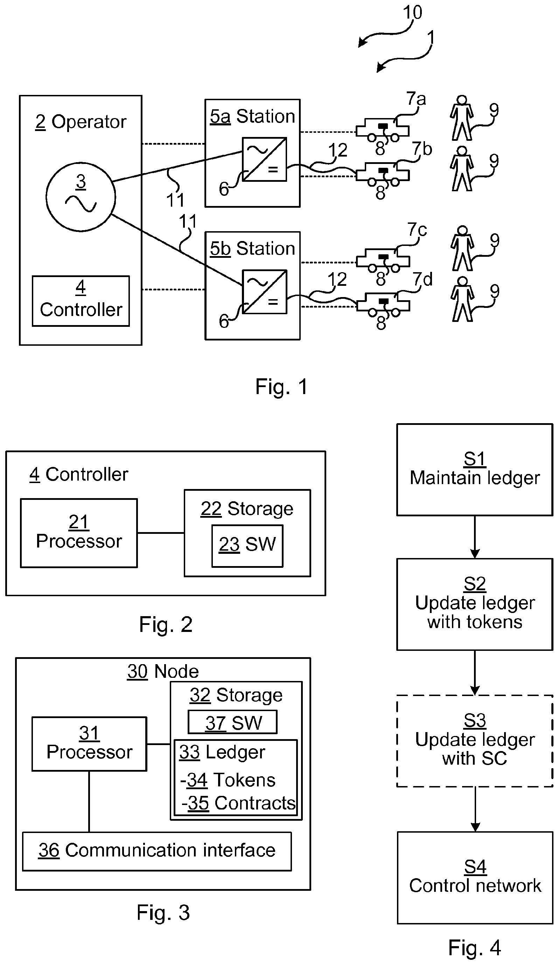

Figure 1 illustrates an electrical power network 1, comprising a distribution grid 3 of a grid operator 2, and a plurality of charging stations 5 for EVs 7.

The grid 3 is typically an Alternating Current (AC) grid which is arranged to supply electric power to the charging stations 5 via electrical (typically galvanic) connections 11, which charging stations may in turn provide Direct Current (DC) electrical power to any EV(s) 7 connected thereto via electrical (typically galvanic) connections 12. Each of the charging stations 5, here 5a and 5b, may comprise an AC-to-DC converter 6, operating as a rectifier to provide a connected EV 7 with DC power from the AC grid 3 via the station 5. Additionally, in some embodiments, the converter 6 may operate as an inverter to provide AC power to the grid 3 from a connected EV 7 via the station 5.

The electrical power network 1 comprises a controller 4 configured for controlling the electrical power network. The controller 4 may be controlled by the grid operator 2 (as illustrated in the figure) and/or by at least one station operator of any of the plurality of charging stations 5, and/or by a third party.

Each of the charging stations 5 is configured to exchange electrical power with any of a plurality of EVs 7. Here EVs 7a, 7b, 7c and 7d are schematically shown. Each EV 7 typically comprises a battery arrangement 8 comprising at least one battery, and is controlled by a user 9, e.g. driver, owner or other responsible, of the EV.

Each of the grid operator 2, the stations 5 and the EVs 7 comprises a node 30 (see also figure 3) of a peer-to-peer (P2P) communication network 10, in which P2P network 10 the nodes 30 are configured to communicate with each other, e.g. as indicated by the dotted lines in the figure. Any or each of the nodes 30 may be implemented as a software (SW) application (app) running on processing circuitry in or otherwise associated with the grid operator 2, any of the stations 5 and/or any of the EVs 7. The node 30 of the grid operator 2 may e.g. be integrated in the network controller 4 or be (or be part of) a separate device controlled by the grid operator 2. For each of the EVs 7, its node 30 may be implicated as an app in the EV or in a computing device of the user 9, e.g. a smartphone of the user.

Figure 2 schematically illustrates an embodiment of the network controller 4 of the present disclosure. The controller 4 may be part of the distribution grid 3 management system of the grid operator 2. So the functions of the controller 4 may be implemented in the existing grid controllers of the grid 3. However, the network controller 4 may additionally or alternatively be implemented in a dedicated control device which is employed for this purpose and it is interfaced and connected with the existing grid controller. The controller 4 comprises processing circuitry 21 e.g. a central processing unit (CPU). The processing circuitry 21 may comprise one or a plurality of processing units in the form of microprocessor(s). However, other suitable devices with computing capabilities could be comprised in the processing circuitry 21, e.g. an application specific integrated circuit (ASIC), a field programmable gate array (FPGA) or a complex programmable logic device (CPLD). The processing circuitry 21 is configured to run one or several computer program(s) or software (SW) 23 stored in a data storage 22 of one or several storage unit(s) e.g. a memory. The storage unit 22 is regarded as a computer program product comprising computer-executable components of the SW 23 on a computer readable means, as discussed herein, and may e.g. be in the form of a Random Access Memory (RAM), a Flash memory or other solid state memory, or a hard disk, or be a combination thereof. The processing circuitry 21 may also be configured to store data in the storage 22, as needed.

Figure 3 schematically illustrates an embodiment of a node 30 of the present disclosure. The node 30 comprises processing circuitry 31 e.g. a central processing unit (CPU). The processing circuitry 31 may comprise one or a plurality of processing units in the form of microprocessor(s). However, other suitable devices with computing capabilities could be comprised in the processing circuitry 31, e.g. an application specific integrated circuit (ASIC), a field programmable gate array (FPGA) or a complex programmable logic device (CPLD). The processing circuitry 31 is configured to run one or several computer program(s) or software (SW) 37 stored in a data storage 32 of one or several storage unit(s) e.g. a memory. The SW 37 may e.g. be for maintaining and updating the distributed ledger 33 stored in the data storage 32. The distributed ledger 33 is arranged to hold e.g. tokens 34 of digital information and/or information about smart contracts (SC) 35. The storage unit 32 is regarded as a computer program product comprising computer-executable components of the SW 37 on a computer readable means, as discussed herein, and may e.g. be in the form of a Random Access Memory (RAM), a Flash memory or other solid state memory, or a hard disk, or be a combination thereof. The processing circuitry 31 may also be configured to store data in the storage 32, as needed. The node 30 also comprises a communication interface 36 for communication with other nodes 30 in the P2P network 10, e.g. a wired or wireless, preferably wireless, communication interface 36.

The tokens 34, e.g. cryptographic tokens, and/or SC 35, as mentioned in relation to prior art, of digital information may be used plan and/or organize the power distribution within the electrical power network 1, e.g. as regards to when an EV 7 should be provided with electrical power from the grid 3 and (possibly) via which charging station 5, how much electrical power from the grid 3 should be provided to an EV 7 and (possibly) via which charging station 5, whether an EV 7 is allowed or not allowed to be provided with electrical power from the grid 3 and/or via which charging station 5.

The digital information of tokens 34 stored in the distributed ledger 33 may e.g. include any of the following information: State of Charge (SoC) of batteries 8 of any one of the EVs 7; location of any one of the charging stations 5 and/or of any one of the EVs; energy amount and/or maximum power available to any one of the charging stations 5 from the grid 3 and/or from any one of the EVs 7; right of any one of the charging stations 5 and/or any one of the EVs 7 to exchange electrical energy with the grid 3, and/or of any one of the EVs to connect to any one of the charging stations; health status of the grid 3 and/or of any one of the charging stations 5 and/or any one of the EVs 7; identity or type of any one of the EVs 7 and/or of batteries 8 of any one of the EVs; time slots scheduled for exchange, and/or availability for exchange, of electrical energy between the grid 3 and any one of the EVs via any one of the charging stations 5; and/or records of historical success in exchange, and/or of historical amount of exchange, and/or of historical time and/or duration of exchange, of electrical energy between the grid 3 and any one of the EVs 7 via any one of the charging stations 5. The terms "electrical power" and "electrical energy" may be used interchangeably herein.

It is noted that each of the stations 5 may be able to obtain electrical power from a first EV 7 connected thereto for distributing of the electrical power to a second EV 7 connected to the same station 5 or to another station 5 within the electrical power network 1, and with a higher priority than the first EV, e.g. if the power available from the grid 3 is limited.

Figure 4 illustrates embodiments of the method of the present invention. The method is for controlling an electrical power network 1 comprising a distribution grid 3 of a grid operator 2 and a plurality of charging stations 5 for EVs 7. The method comprises maintaining S1 a distributed ledger 33 which is shared over a P2P network in which the grid operator, each of the plurality of charging stations and each of the EVs configured to use said charging stations comprises a node 30 in said P2P network. The method also comprises, by means of a consensus algorithm, updating S2 the distributed ledger with tokens 34 of digital information relevant to the electrical power network. Optionally, the method also comprises, by means of a consensus algorithm, updating S3 the distributed ledger 33 with Smart Contracts 35 between the grid operator 2 and at least one operator of any of the plurality of charging stations 5 and/or at least one operator 9 of any of the EVs 7. The method also comprises controlling S4 the electrical power network 1 based on the digital information of the tokens 34 in the updated S2 (and optionally S3) distributed ledger 33.

In some embodiments of the present invention, the digital information of the tokens 34 includes any of:
- State of Charge (SoC) of batteries 8 of any one of the EVs 7;
- location of any one of the charging stations 5 and/or of any one of the EVs;
- energy amount and/or maximum power available to any one of the charging stations from the grid 3 and/or from any one of the EVs;
- right of any one of the charging stations and/or any one of the EVs to exchange electrical energy with the grid, and/or of any one of the EVs to connect to any one of the charging stations;
- health status of the grid and/or of any one of the charging stations and/or any one of the EVs;
- identity or type of any one of the EVs and/or of batteries of any one of the EVs;
- time slots scheduled for exchange, and/or availability for exchange, of electrical energy between the grid and any one of the EVs via any one of the charging stations; and/or
- records of historical success in exchange, and/or of historical amount of exchange, and/or of historical time and/or duration of exchange, of electrical energy between the grid and any one of the EVs via any one of the charging stations.

In some embodiments of the present invention, the digital information includes information about compliance with the Smart Contracts 35.

In some embodiments of the present invention, the network controller 4 is controllable, alternatively not controllable, by the grid operator 2 e.g. as a controller integrated with a grid controller of the grid 3 or as a separated control device interfaced with the grid controller and controlled by the grid operator or by a third part (e.g. including any of the operators of the charging stations 5 and/or the EVs 7.

In some example embodiments of the present invention, a charging station 5 may be capable of allowing a customer (e.g. a buyer, e.g. user 9, of electricity for an EV 7), once the EV is connected to the station 5, to execute any one or several of the following actions:
∘ Access through a smartphone/laptop to a distributed ledger 33 (privates or public, anonymous or not).
∘ Synchronize the charging station 5 access to a chosen distributed ledger 33.
∘ Use application/distributed applications provided by third parties.
∘ Use of smart contracts 35.
∘ Decide and/or check which information of the station 5 and/or EV 7 exchanged between them and with distributed ledger 33.
∘ Use application/distributed application to modify control settings of the station 5.
∘ Use of cryptographic tokens 34 within application/distributed applications (e.g. exchange tokens, crypto).
∘ Utilize cyber security services.

The station 5 may be capable of allowing third parties to implement their applications developed on ledger based platforms in a safe and secure way. This may imply:
∘ Use of application/distributed application to modify control settings of the station 5.
∘ Use of cryptographic tokens.
∘ Use of smart contracts.
∘ Synchronize on chosen distributed ledgers.

### Example 1 - Flexible Load

An objective is to coordinate and control the charging and discharging profiles of several EVs 7 in order to provide to the grid operator 2 a chosen load profile. It is possible to envision a solution for providing flexible load to the grid 3 through the implementation of coordination mechanisms based on decentralized applications that adopt distributed ledgers 33.

The coordination of the charging/discharging profiles of the EVs 7 can be based on market mechanisms that can be implemented through a decentralized application. The implementation of the coordination intelligence could employ a distributed agent approach or a data aggregator for the pool.

In order to participate to the pool, a user 9 (buyer of electricity for EV 7) may do any of:
∘ Input parking time.
∘ Input min and max charging level wanted at the end of the parking time.
∘ Sign a digital contract 35.
∘ Get payed for any service provided and electricity sold to the network 1, e.g. grid operator 2 or charging station 5.
∘ Pay any electricity bought from the network 1, e.g. grid operator 2 or charging station 5.
∘ Pay in case of disrespect of contract requirements (e.g. shorter parking time).

In order to support the coordination mechanisms the pool intelligence may do any of:
∘ Interact with the grid operator 2 (flexibility margins, forecast, sign a digital contract, exchange the required power with the grid 3).
∘ Coordinate the transactions of energy and tokens 34 within the pool Vehicle-to-Vehicle (V2V), optimize the energy flows.
∘ Get payed for the service.
∘ Take actions in case of contingencies.

Benefits of such a solution may be any of e.g.:
∘ Transparency.
∘ Trustless environment.
∘ Support of third party application in distributed ledger platforms.

In order to implement the solution described in this Example, a station 5 could be able to do any of:
∘ Support the implementation of a smart contract 35 between a user 9 and the pool.
∘ Support user data exchange within the pool and distributed ledger 33 (e.g. parking times, other user request and data).
∘ Implement dynamically changing charge/discharge profiles.
∘ Exchange tokens 34 with the EV 7, within and with the pool.
∘ Support the pool to implement, if needed, corrective actions in case of contingencies (e.g. failures, anticipated parking stop, etc.

### Example 2 - Sharing of charging stations in multiapartment complex without intermediaries

The operation of stations 5 in multi-apartment dwellings poses several challenges, mainly connected with the property management organizations, the sharing functionalities for independent users 9, the book-keeping, etc.

For example, the total number of charging stations 5 may be less than the total number of EVs 7 owned by house-holders, i.e. users 9. Occasionally, also guest users 9 could be allowed to use the stations 5. There is a need of keeping track, in a transparent and secure way, of the user identity, the booking times, the electricity quantities purchased/sold by each user 9. In a scenario of multiple grid operators 2, there could also be a case that different users want to buy electricity from different grid operators 2.

Even if there could be some trust among the users 9, there could not be any complete trust in each other. One option could be to hire an external operator that can provide such bookkeeping services and organization. But even in this case there could be limited trust in an external operator to handle sensitive private data. With distributed ledgers 33 it may be possible to envision that such a service can be setup internally to the users of the housing complex in a decentralized manner.

The idea may comprise to provide services for optimized sharing of the stations 5, for billing systems and monitoring of the use of the charging stations.

An application based on distributed ledgers 33 and smart contracts 35 may be considered for the operational management of parking lots in a trustless environment that requires secure transparency.

It may be possible to realize applications that can handle typical problems such as:
∘ Booking charging time.
∘ Monitor billing books.
∘ Control any mis-use and anomalous behaviours.
∘ Implement selling/buying of digital contracts 35 with grid operators 2.

Benefits of such a solution may e.g. be found in:
∘ Transparency.
∘ Trustless environment among users.
∘ Implementation costs if distributed ledgers 33 reach their declared development targets.
∘ No need for external intermediaries in handling private data of users.

The functionality of each of the charging stations 5 may be as described above.

### Example 3 - Operation of EV parking lots

In this use scenario, a parking lot operator may deliver charging and parking services to external customers (users 9). The parking lot operator purchases/sells electricity to the grid operator 2. The trust boundaries are such that the users 9 (e.g. car owners/operators) and the parking lot operator do not have full trust in each other.

In order to provide billing systems, booking services, different types of subscriptions and more advanced contracts for buying and selling electricity (e.g. Grid-to-Vehicle (G2V) and Vehicle-to-Grid, V2G) it may be required to realize a digital platform for implementing such types of digital contracts 35 among the users 9 and the parking operator or among the parking operator and the grid operator 2. This platform may fulfil requirements on transparency, safety and security that can be provided by distributed ledgers 33 based solutions.

An application based on distributed ledgers 33 and smart contracts 35 may be considered for the operational management of parking lots in a trustless environment that requires secure transparency.

It may be possible to realize applications that can handle typical problems such as any of:
∘ Booking charge time.
∘ Handle the billing.
∘ Control any mis-use and anomalous behaviours.
∘ Data analytics

Benefits of such a solution may e.g. be found in:
∘ Transparency.
∘ Trustless environment among users 9.
∘ Implementation costs if distributed ledgers 33 reach their declared development targets.

The functionality of each of the charging stations 5 may be as described above.

Embodiments of the present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product 22 which is a non-transitory storage medium or computer readable medium (media) having instructions stored thereon/in, in the form of computer-executable components or software (SW) 23, which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of controlling an electrical power network (1) comprising a distribution grid (3) of a grid operator (2) and a plurality of charging stations (5) for electrical vehicles, EV, (7), the method comprising:
maintaining (S1) a distributed ledger (33) which is shared over a peer-to-peer, P2P, network (10) in which the grid operator, each of the plurality of charging stations and each of the EVs configured to use said charging stations comprises a node (30) in said P2P network;
by means of a consensus algorithm, updating (S2) the distributed ledger with tokens (34) of digital information relevant to the electrical power network; and
controlling (S4) the electrical power network based on the digital information of the tokens in the updated distributed ledger.

2. The method of claim 1, wherein the digital information of the tokens (34) includes any of:
State of Charge, SoC, of batteries (8) of any one of the EVs (7);
location of any one of the charging stations (5) and/or of any one of the EVs;
energy amount and/or maximum power available to any one of the charging stations from the grid (3) and/or from any one of the EVs;
right of any one of the charging stations and/or any one of the EVs to exchange electrical energy with the grid, and/or of any one of the EVs to connect to any one of the charging stations;
health status of the grid and/or of any one of the charging stations and/or any one of the EVs;
identity or type of any one of the EVs and/or of batteries of any one of the EVs;
time slots scheduled for exchange, and/or availability for exchange, of electrical energy between the grid and any one of the EVs via any one of the charging stations; and/or records of historical success in exchange, and/or of historical amount of exchange, and/or of historical time and/or duration of exchange, of electrical energy between the grid and any one of the EVs via any one of the charging stations.

3. The method of any preceding claim, further comprising:
by means of a consensus algorithm, updating (S3) the distributed ledger with Smart Contracts (35) between the grid operator (2) and at least one operator of any of the plurality of charging stations (5) and/or at least one operator (9) of any of the EVs (7).

4. The method of claim 3, wherein the digital information includes information about compliance with the Smart Contracts (35).

5. A computer program product (22) comprising computer-executable components (23) for causing a network controller (4) to perform the method of any preceding claim when the computer-executable components are run on processing circuitry (21) comprised in the network controller.

6. A network controller (4) for controlling an electrical power network (1) comprising a distribution grid (3) of a grid operator (2) and a plurality of charging stations (5) for electrical vehicles, EV, (7), the network controller comprising:
processing circuitry (21); and
data storage (22) storing instructions (23) executable by said processing circuitry whereby said network controller is operative to:
maintain a distributed ledger (33) which is shared over a peer-to-peer, P2P, network (10) in which the grid operator, each of the plurality of charging stations and each of the EVs configured to use said charging stations comprises a node (30) in said P2P network;
by means of a consensus algorithm, update the distributed ledger with tokens (34) of digital information relevant to the electrical power network; and
control the electrical power network based on the digital information of the tokens in the updated distributed ledger.

7. The network controller of claim 6, wherein the network controller (4) is controllable by the grid operator (2).

8. The network controller of claim 6, wherein the network controller (4) is controllable by a third party, not by the grid operator (2).
